# EUROPEAN PATENT SPECIFICATION

(11) **EP 2 866 368 B1**
(45) Date of publication and mention of the grant of the patent: **04.12.2019**
(21) Application number: 13306454.3
(22) Date of filing: 22.10.2013
(51) Int. Cl.: H04J 14/06, H04B 10/61

(54) **Digital polarization demultiplexing**
Digitales Polarisierungsdemultiplexen
Démultiplexage de polarisation numérique

(43) Date of publication of application: 29.04.2015
(73) Proprietor: Alcatel Lucent, 91620 Nozay (FR)
(72) Inventor: Buchali, Fred, 70435 Stuttgart (DE)
(74) Representative: Browne, Robin Forsythe

(56) References cited:
- US-A1- 2012 002 971
- RENE SCHMOGROW ET AL: "Blind Polarization Demultiplexing With Low Computational Complexity", IEEE PHOTONICS TECHNOLOGY LETTERS, IEEE SERVICE CENTER, PISCATAWAY, NJ, US, vol. 25, no. 13, 1 July 2013 (2013-07-01), pages 1230-1233, XP011515642, ISSN: 1041-1135, DOI: 10.1109/LPT.2013.2261289
- FREUDE WOLFGANG ET AL: "Polarisation demultiplexing in coherent receivers with real-time digital signal processing", 2013 15TH INTERNATIONAL CONFERENCE ON TRANSPARENT OPTICAL NETWORKS (ICTON), IEEE, 23 June 2013 (2013-06-23), pages 1-4, XP032484027, ISSN: 2161-2056, DOI: 10.1109/ICTON.2013.6602784 [retrieved on 2013-09-17]

## Description

The present document relates to optical transmission networks. In particular, the present document relates to the demultiplexing of polarization division multiplexed optical signals.

Optical transmission networks may make use of polarization division multiplexing for increasing (notably for doubling) the transmission capacity of a transmission link. For this purpose, information (e.g. a bitstream) may be transmitted on two (typically orthogonal) polarizations of an optical carrier. An optical transmission link comprises an optical transmitter configured to generate a modulated optical signal carrying information on two different polarizations. Furthermore, the optical transmission link comprises an optical receiver (e.g. a coherent optical receiver) configured to recover the information (e.g. the bitstream) from the received optical signal.

An optical signal which has been sent over an optical transmission link by an optical transmitter may incur distortions, e.g. due to chromatic dispersion (CD) and/or polarization mode dispersion (PMD) of the transmission medium of the transmission link, such that the received optical signal typically corresponds to a distorted version of the transmitted optical signal. The optical receiver may be configured to perform digital processing in order to recover the transmitted information from the received optical signal. In particular, the optical receiver may be configured to perform digital processing for demultiplexing the polarization division multiplexed signal. This type of digital processing is often referred to as polarization demultiplexing.

Polarization demultiplexing may constitute a significant part of the digital processing which is performed at the optical receiver. A butterfly filter comprising a plurality of FIR (Finite Impulse Response) subfilters may be used to perform polarization demultiplexing. Each FIR subfilter of the butterfly filter may comprise a substantial number of filter coefficients (e.g. 10 to 15 filter coefficients and more). A CMA (Constant Modulus Algorithm) and/or a MMA (Multi Modulus Algorithm) may be used to determine the filter coefficients in a blind adaptation mode. Alternatively or in addition, training assisted approaches may be used to determine the filter coefficients, using training data comprised within the received optical signal. However, such training assisted approaches typically suffer from an additional transmission overhead and from a limited temporal validity of the determined filter coefficients.

In view of the disadvantages of training assisted approaches, blind adaptation schemes using e.g. CMA or MMA are usually preferred. However, as a result of using a butterfly filter comprising subfilters with relatively high numbers of filter coefficients, the adaptation procedure may be computationally intensive. Furthermore, a misalignment of the subfilters may cause a degradation of the demultiplexing result. In addition, degradation due to a limited length of the subfilters of the butterfly filter may cause degradations. An increase of the filter length typically enables an improved performance in case of optimal adjustment of the filter coefficients, however, an increase of the filter length also tends to decrease the speed of the adaptation algorithms. In addition, the significant computational complexity of CMA or MMA usually causes high power consumption in ASICs (Application specific integrated circuits) which are used for implementing polarization demultiplexing.

Document RENE SCHMOGROW ET AL: "Blind Polarization Demultiplexing With Low Computational Complexity", IEEE PHOTONICS TECHNOLOGY LETTERS, IEEE SERVICE CENTER,PISCATAWAY,NJ, US, vol.25, no.13,1 July 2013, pages 1230-1233, XP011515642 discloses a demultiplexing unit for demultiplexing polarization multiplexed optical signals. The demultiplexing unit comprises a phase shift unit, a butterfly filter for rotating both received fields by an angle and a cost function unit for determining the phase shift and angle parameters.

Document US 2012/002971 A1 discloses a polarization-tracking device having a waveguide grating that serves as a polarization splitter and an optical fiber-to-waveguide coupler. The polarization-tracking device also has an optical mixing circuit configured to receive light from the waveguide grating and a control circuit for tuning the optical mixing circuit to produce two optical output signals that represent, e.g., two independently modulated polarization components of a polarization-multiplexed optical input signal or two principal states of polarization of an optical input signal that has been subjected to polarization-mode dispersion.

The present document addresses the above mentioned technical problems. In particular, the present document describes a method and a corresponding system for performing polarization demultiplexing at reduced computational complexity. The method and system which are described in the present document are particularly well suited for performing polarization demultiplexing of received optical signals which have been transmitted over a transmission medium (e.g. an optical fiber) which exhibits PMD and/or Polarization dependent losses (PDL). According to an aspect a polarization demultiplexing unit configured to determine a first and a second polarization demultiplexed signal from a first and a second polarization signal is described. The polarization demultiplexing unit may be implemented using a digital signal processor. The polarization demultiplexing unit may be used within an optical receiver of an optical transmission system. The first and the second polarization demultiplexed signals may correspond to signals which have been transmitted using two different polarization planes of an optical signal. The different polarization planes are typically orthogonal with respect to one another. The first and the second polarization signals may have been derived from a received optical signal using a coherent frontend comprising analog-to-digital converters (ADC), to yield the first and the second digital and complex valued polarization signals.

The polarization demultiplexing unit comprises a delay unit configured to delay a signal derived from the first polarization signal relative to a signal derived from the second polarization signal by a delay parameter, to yield a first delayed signal. The first and the second polarization signals may be processed prior to being submitted to the delay unit, thereby yielding a signal derived from the first polarization signal and a signal derived from the second polarization signal. In an example, the delay unit is arranged to delay the first polarization signal relative to the second polarization signal by the delay parameter. The delay parameter may be or may be indicative of a fixed delay or a (time-) variable delay.

The polarization demultiplexing unit further comprises a spatial rotation entity configured to perform a spatial rotation of the first delayed signal and of the signal derived from the second polarization signal using a phase shift parameter and a rotation angle parameter. The spatial rotation entity may comprise a phase shift unit and a rotation unit. The phase shift unit may be configured to apply a phase shift in accordance to the phase shift parameter to the signal derived from the second polarization signal, to yield a second phase shifted signal. Alternatively, the phase shift may be applied to the first delayed signal. In general terms, the phase shift unit may be configured to perform a phase shift in accordance to the phase shift parameter to the signal derived from the second polarization signal or to the first delayed signal. The rotation unit may be configured to rotate the first delayed signal and the second phase shifted signal (or the first delayed and phase shifted signal and the signal derived from the second polarization signal) in accordance to the rotation angle parameter, to yield the first and second polarization demultiplexed signals. For this purpose, the rotation unit may be configured to apply a rotation matrix in accordance to the rotation angle parameter to the two signals at the input of the rotation unit.

The spatial rotation entity may provide the first and/or the second polarization demultiplexed signals at its output (subsequent to phase shifting and rotation).

The polarization demultiplexing unit may further comprise a parameter determination unit configured to determine the phase shift parameter and the rotation angle parameter using a cost function depending on a property of the first and second polarization demultiplexed signals. As indicated above, the delay parameter may be variable (along the sequence of samples of the first and second polarization signals). In such cases, the parameter determination unit may be configured to also determine the delay parameter using the cost function.

As such, the polarization demultiplexing unit may make use of a limited number of parameters, notably a delay parameter, a phase shift parameter and a rotation angle parameter, for performing polarization demultiplexing. The limited number of parameters allows for a resource efficient and high speed implementation of the polarization demultiplexing unit. Furthermore, the use of a delay parameter in combination with a phase shift parameter and a rotation angle parameter allows for the compensation of polarization mode dispersion (PMD) at an optical receiver comprising the polarization demultiplexing unit.

The cost function may depend on an (e.g. average) absolute value of the amplitudes or on a quality factor of the first and the second polarization demultiplexed signals. In particular, the cost function may depend on the sum of the (e.g. averaged) absolute value of the amplitudes or on the quality factors of the first and the second polarization demultiplexed signals.

The parameter determination unit may be configured to determine the phase shift parameter and the rotation angle parameter (as well as the delay parameter) iteratively on a sample-by-sample basis, such that the cost function is increased (e.g. maximized) or decreased (e.g. minimized). For this purpose, a gradient decent scheme may be applied. In particular, the parameter determination unit may be configured to determine the phase shift parameter and the rotation angle parameter (as well as the delay parameter) using e.g. a steepest decent method. As indicated above, the first and second polarization signals may each comprise temporal sequences of samples. Each sample may cover a pre-determined temporal sample period (in accordance to the sampling rate). The delay parameter may correspond to an integer multiple of the temporal sample period. As such, the delay unit may be implemented in a computationally efficient manner using one or more latches.

The delay unit may comprise an interpolation filter comprising a plurality of filter coefficients. The plurality of filter coefficients may be dependent on the delay parameter, such that the interpolation filter is configured to delay the signal derived from the first polarization signal by the delay parameter. As such, an interpolation filter may be used to apply a particular delay (in accordance to the delay parameter) to the signal derived from the first polarization signal. The interpolation filter may be used for delays which correspond to fractions of one or more sample periods.

The delay unit may comprise a look-up table providing a mapping between different delay parameters and different pluralities of filter coefficients for different interpolation filters. The delay unit may be configured to determine the interpolation filter for a particular delay parameter, using the look-up table. As such, the interpolation filter may be determined in a computationally efficient manner.

The polarization demultiplexing unit may further comprise an initial spatial rotation entity configured to perform a spatial rotation of the first and second polarization signals using an initial phase shift parameter and an initial rotation angle parameter, to yield the signals derived from the first and second polarization signals. The initial rotation entity may comprise a phase shift unit and a rotation unit, as outlined above. The use of an initial spatial rotation entity followed by a delay unit and followed by a further spatial rotation unit may be beneficial, as it allows the use of a fixed delay parameter. The parameter determination unit may be configured to also determine the initial phase shift parameter and the initial rotation angle parameter using the cost function.

The polarization demultiplexing unit may comprise a first processing path for determining the first polarization demultiplexed signal, and a second processing path for determining the second polarization demultiplexed signal. The first and second processing paths may each comprise a dedicated delay unit and a dedicated spatial rotation entity using dedicated delay parameters, phase shift parameters and rotation angle parameters. In other words, the first and second polarization demultiplexed signals may be determined using dedicated polarization demultiplexing processing paths. This may be beneficial in situations where the polarization planes of the first and second polarization signals are not fully orthogonal with respect to one another. Such a situation may occur in case of a transmission medium causing polarization dependent losses. The parameter determination unit may then be configured to also determine the dedicated phase shift parameters and rotation angle parameters.

According to a further aspect, an optical receiver configured to recover data from a received optical signal is described. The optical receiver may comprise a coherent frontend configured to determine a first polarization signal and a second polarization signal from the received optical signal. The first and second polarization signals may be digital signals. Furthermore, the first and second polarization signals may be indicative of different polarization planes of the received optical signal. The different polarization planes may be orthogonal with respect to one another.

Furthermore, the optical receiver may comprise a polarization demultiplexing unit to determine a first and a second polarization demultiplexed signal from the first and second polarization signals. The polarization demultiplexing unit may comprise any of the features described in the present document. In addition, the optical receiver may comprise a decision unit configured to determine the data from the first and second polarization demultiplexed signals.

The optical receiver may further comprise first and second shaping filters for filtering signals derived from the first and second polarization signals, respectively. The first and second shaping filters may be dependent on an optical transmitter of the received optical signal.

According to a further aspect, a method for determining a first and a second polarization demultiplexed signal from a first and a second polarization signal is described. The method comprises delaying a signal derived from the first polarization signal relative to a signal derived from the second polarization signal by a delay parameter, to yield a first delayed signal. Furthermore, the method comprises performing a spatial rotation of the first delayed signal and of the signal derived from the second polarization signal using a phase shift parameter and a rotation angle parameter. In addition, the method may comprise determining the phase shift parameter and the rotation angle parameter using a cost function depending on a property of the first and second polarization demultiplexed signals. The property may e.g. relate to an absolute value of an amplitude of the first and second polarization demultiplexed signals.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present patent application may be used standalone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein
Fig. 1 shows a block diagram of an example polarization demultiplexing unit;
Fig. 2a shows a block diagram of an example frontend of a coherent optical receiver;
Fig. 2b shows a block diagram of an example polarization demultiplexing unit for an optical signal having incurred PMD;
Fig. 3 shows a block diagram of another example polarization demultiplexing unit for an optical signal having incurred PMD; and
Fig. 4 shows a block diagram of an example polarization demultiplexing unit for an optical signal having incurred polarization dependent losses (PDL).

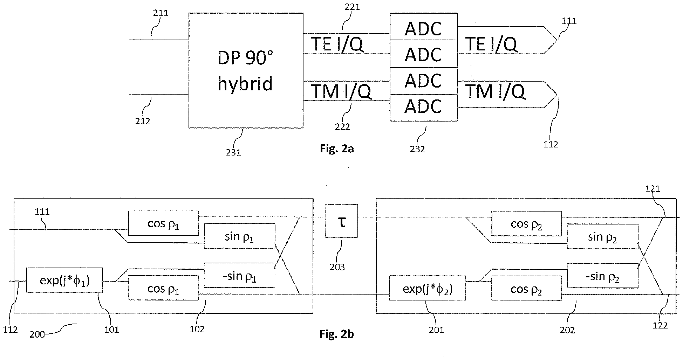

Fig. 2a shows a block diagram of an example frontend of a coherent optical receiver. The received optical signal 211 may be superimposed with a local oscillator signal within a hybrid unit 231 to yield two signals, a first analog polarization signal 221 and a second analog polarization signal 222, which are typically indicative of two orthogonal polarizations of the received optical signal 211. The first analog polarization signal 221 and the second analog polarization signal 222 may be converted into the digital domain using analog-to-digital converters 232 to yield a first (digital) polarization signal 111 and a second (digital) polarization signal 112.

The polarization signals 111, 112 are typically indicative of complex field amplitudes Eₓ and E_{y}, respectively, for two different polarization planes x and y. The two polarization planes x and y may be orthogonal with respect to one another. Each polarization signal 111, 112 comprises an in-phase component and a quadrature phase component. The polarization planes of the optical transmitter and of the optical receiver are usually not aligned. Hence, the first and second polarization signals 111, 112 may be viewed as projections of the originally transmitted first and second polarization signals onto the polarization planes x and y of the optical receiver. It is a task of polarization demultiplexing to recover the originally transmitted first and second polarization signals from the first and second polarization signals 111, 112. This may be achieved by performing a rotation of the first and second polarization signals 111, 112 within the socalled Strokes space.

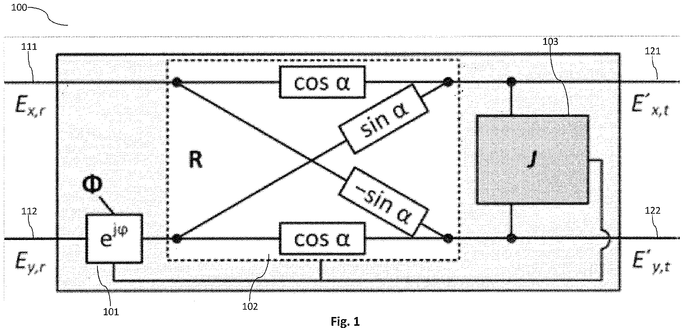

Fig. 1 shows a block diagram of an example polarization demultiplexing unit 100 configured to convert the first and second polarization signals 111, 112, referred to as Eₓ and E_{y}, into first and second polarization demultiplexed signals 121, 122, referred to as E'ₓ and E'_{y}. The polarization demultiplexing unit 100 comprises a phase retardation or a phase shift unit 101 configured to apply a relative phase shift ϕ to one of the polarization signals 111, 112. In the illustrated example, the phase shift is applied to the second polarization signal 112. Furthermore, the polarization demultiplexing unit 100 comprises a rotation unit 102 configured to apply a rotation to the first and the second polarization signals by the rotation angle α. The phase shift unit 101 and the rotation unit 102 may be referred to as a spatial rotation element. The spatial rotation element may be configured to perform a spatial rotation of the first and second polarization signals 111, 112.

In addition, the polarization demultiplexing unit 100 comprises a parameter determination unit 103 which is configured to determine the phase shift ϕ and the rotation angle α using a cost function J. The cost function typically depends on a property of the polarization demultiplexed signals 121, 122. By way of example, the cost function J may be indicative of the signal power and/or of the signal amplitude of the polarization demultiplexed signals 121, 122. The phase shift ϕ and the rotation angle α may be determined in an iterative and/or a recursive manner by maximizing or minimizing the cost function J on a sample-by-sample basis. The recursive determination of the phase shift ϕ and of the rotation angle α may make use of a gradient method (e.g. a steepest decent method).

The polarization demultiplexing unit 100 of Fig. 1 is beneficial, as it requires the determination of only two parameters (the phase shift ϕ and the rotation angle α) instead of the determination of a butterfly filter comprising FIR subfilters with a relatively high number, of filter coefficients (e.g. 10-15 filter coefficients per FIR subfilter). However, the performance of the polarization demultiplexing unit 100 of Fig. 1 typically decreases substantially if the received optical signal 211 has been submitted to PMD. Hence, it may be beneficial to adapt the polarization demultiplexing unit 100 of Fig. 1, in order to increase its performance in case of PMD distorted optical signals.

Polarization Mode Dispersion (PMD) is typically caused by random imperfections and asymmetries of an optical transmission medium (e.g. an optical fiber) which leads to different propagation speeds for the different polarizations of an optical signal. PMD may be modeled using a delay τ. In particular, PMD may be taken into account at the optical receiver by delaying the first polarization signal 111 with respect to the second polarization signal 112 (or vice versa) by a delay τ.

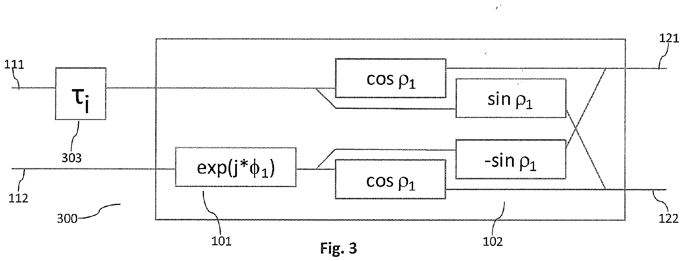

Fig. 3 shows an example polarization demultiplexing unit 300 comprising a phase shift unit 101 and a rotation unit 102. Furthermore, the polarization demultiplexing unit 300 comprises a delay unit 303 configured to apply a delay τ to the first or the second polarization signal 111, 112. In the illustrated example, the delay τ is applied to the first polarization signal. The parameter determination unit 103 (not shown) may be configured to determine the parameters of the polarization demultiplexing unit 300, i.e. the phase shift ϕ₁, the rotation angle ρ₁ and the delay τᵢ. As outlined above, the parameters may be determined by reducing (e.g. minimizing) or by increasing (e.g. maximizing) a pre-determined cost function in an iterative and/or recursive manner. The cost function may be dependent on the first and second polarization demultiplexed signals 121, 122. Due to the reduced number of parameters (three parameters, instead of 40-60 parameters), the computational complexity of this iterative process is substantially decreased.

It should be noted that the delay τᵢ may be variable and/or may take on fractional sample values. In other words, the delay τᵢ may correspond to a fraction of a sample. Such fractional delays may be implemented using an interpolation filter, e.g. an FIR filter, comprising a plurality of filter coefficients. The filter coefficients of the interpolation filter for a particular delay τᵢ may be pre-determined. By way of example, the polarization demultiplexing unit 300 may comprise a look-up table for mapping a particular delay τᵢ to a corresponding interpolation filter. Hence, the interpolation filter can be determined in a computationally efficient manner. The interpolation filter which generates the delay τᵢ may comprise a programmed setting which depends on the available channel adjustment. For adaptation of the interpolation filter a correlation method may be applied.

Fig. 2b shows a block diagram of another polarization demultiplexing unit 200 which is configured to process PMD distorted optical signals. The polarization demultiplexing unit 200 makes use of two spatial rotation entities comprising a phase shift unit 101, 201 and a rotation unit 102, 202 each. The two spatial rotation entities may be separated by a delay unit 203 which is configured to apply a delay τ to one of the polarization signals. The first spatial rotation entity 102 may be directed at changing the orientation of (i.e. rotating) the first and second polarization signals 111, 112 with respect to the delay τ. The second spatial rotation entity 202 may be directed at changing the orientation of (i.e. rotating) the first and second polarization signals 111, 112 with respect to the decision unit of the receiver. The delay τ may be a fixed or a variable delay. In order to reduce the computational complexity, the delay τ may be limited to an integer multiple of a sample period. In this case, the fixed or variable delay may be implemented without using an interpolation filter. The delay may then be implemented e.g. using a latch. Notably when using first and second spatial rotation entities 102, 202, as illustrated in Fig. 2b, the delay τ may be a fixed delay.

It should be noted that the ADCs 232 may be configured to oversample the analog polarization signals 221, 222 (e.g. by a factor of two with respect to the symbol rate). This oversampling may be beneficial for timing recovery at the optical receiver. As such, a delay which is limited to an integer multiple of a sample period may correspond to a fraction (e.g. to ½) of the symbol period.

For the polarization demultiplexing unit 200 of Fig. 2b, the parameters of the first and second spatial rotation entities (i.e. the phase shifts and the rotation angles), as well as a possible, variable delay, may be "determined using a feedback signal derived from the first and second polarization demultiplexed signals 121, 122 (as outlined above). For this purpose, the polarization demultiplexing unit 200 may comprise a parameter determination unit 103 configured to determine the parameters based on a property and/or a cost function of the first and second polarization demultiplexed signals 121, 122.

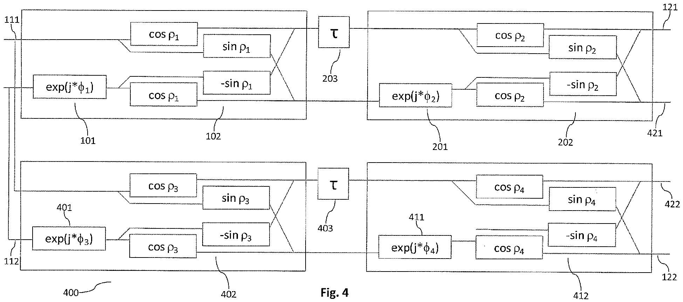

In case of significant PDL (polarization dependent loss) a parallelization of the polarization demultiplexing structure as shown in Fig. 4 may be used to determine the polarization demultiplexed signals 121, 122. In case of PDL, it may occur that the polarization components of the received optical signal are not orthogonal with respect to each other. The polarization demultiplexing unit 400 of Fig. 4 takes this into account by performing a separate polarization demultiplexing for the first and for the second polarization demultiplexed signals 121, 122. For this purpose, the polarization demultiplexing unit 400 comprises a first arm or a first path (comprising e.g. the polarization demultiplexing unit 200 or the polarization demultiplexing unit 300) for determining the first polarization demultiplexed signal 121, and a second arm or a second path (comprising e.g. the polarization demultiplexing unit 200 or the polarization demultiplexing unit 300) for determining the second polarization demultiplexed signal 122. The outputs 421, 422 of the first and second processing arm may be used for feedback purposes, i.e. for determining the parameters of the first and second arms (using a parameter determination unit 103).

Such separate processing for the two polarization demultiplexed signals 121, 122 may be beneficial as the optimum parameter values for the two processing arms may not necessarily be the same for the two polarization demultiplexed signals 121, 122.

In the illustrated example, the second processing arm comprises a first spatial rotation entity comprising a phase shift unit 401 and a rotation unit 402, a delay unit 403 and a second spatial rotation entity comprising a phase shift unit 411 and a rotation unit 412.

Subsequent to or downstream of polarization demultiplexing further digital processing stages, such as timing recovery, frequency estimation and/or phase estimation, may be applied to recover the transmitted information comprised within the received optical signal 211.

Furthermore, a signal shaping filter may be applied to individually filter the polarization demultiplexed TE and TM channels (i.e. the first and second polarization demultiplexed signals 121, 122 or signals derived therefrom) separately. These shaping filters may comprise a fixed filter which may depend on the optical transmitter, on the transmission link and/or on the optical receiver (e.g. a RRC, root-raised cosine, filter suitable to the transmitter). Furthermore, the shaping filters may comprise variable filters.

Finally, decision directed feedback may be used to recover the transmitted information from the processed signals. Decision directed feedback may be beneficial due to a fast and high accuracy feedback.

In the present document, polarization demultiplexing units (and corresponding methods) have been described which make use of a reduced number of parameters. As a result of this, the computational complexity and the power consumption of polarization demultiplexing may be reduced, and the adaptation speed may be increased. The polarization demultiplexing units make use of simple mathematical operations such as phase rotations and attenuation, thereby leading to a substantial decrease of computational complexity (e.g. by a factor of two). Subsequent to polarization demultiplexing a shaping filter may be used for channel compensation. Such a shaping filter may be used within each polarization (TE and TM) path individually.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A polarization demultiplexing unit (200, 300, 400) configured to determine a first and a second polarization demultiplexed signal (121, 122) from a first and a second polarization signal (111, 112), the polarization demultiplexing unit (200, 300, 400) comprising
- a coherent optical frontend (231, 232) configured to receive an optical signal and to generate the first and second polarization signals (111, 112), wherein the first and second polarization signals (111, 112) each comprise temporal sequences of samples;
the polarization demultiplexing unit (200, 300, 400) **characterized by**:
- a delay unit (203, 303, 403) configured to delay a signal derived from the first polarization signal (111) relative to a signal derived from the second polarization signal (112) by a delay parameter, to yield a first delayed signal;
- a spatial rotation entity (102, 202) configured to perform a spatial rotation of the first delayed signal and of the signal derived from the second polarization signal (112) using a phase shift parameter and a rotation angle parameter; and
- a parameter determination unit (103) configured to determine the phase shift parameter and the rotation angle parameter using a cost function depending on a property of the first and second polarization demultiplexed signals (121, 122), wherein the phase shift parameter and the rotation angle parameter are determined iteratively on a sample-by-sample basis such that the cost function is increased or decreased, and wherein
- the delay parameter is variable; and
- the parameter determination unit (103) is configured to also determine the delay parameter using the cost function.

2. The polarization demultiplexing unit (200, 300, 400) of any previous claim, wherein
- the spatial rotation entity (102, 202) comprises a phase shift unit (101) and a rotation unit (202);
- the phase shift unit (101) is configured to apply a phase shift in accordance to the phase shift parameter to the signal derived from the second polarization signal (112), to yield a second phase shifted signal;
- the rotation unit (202) is configured to rotate the first delayed signal and the second phase shifted signal in accordance to the rotation angle parameter, to yield the first and second polarization demultiplexed signals (121, 122).

3. The polarization demultiplexing unit (200, 300, 400) of any previous claim, wherein
- each sample covers a pre-determined temporal sample period; and
- the delay parameter corresponds to an integer multiple of the temporal sample period.

4. The polarization demultiplexing unit (200, 300, 400) of any previous claim, wherein
- the delay unit (203, 303, 403) comprises an interpolation filter comprising a plurality of filter coefficients; and
- the plurality of filter coefficients is dependent on the delay parameter, such that the interpolation filter is configured to delay the signal derived from the first polarization signal (111) by the delay parameter.

5. The polarization demultiplexing unit (200, 300, 400) of claim 4, wherein
- the delay unit (203, 303, 403) comprises a look-up table providing a mapping between different delay parameters and different pluralities of filter coefficients; and
- the delay unit (203, 303, 403) is configured to determine the interpolation filter for a particular delay parameter, using the look-up table.

6. The polarization demultiplexing unit (200, 300, 400) of any previous claim, wherein
- the polarization demultiplexing unit (200, 300, 400) further comprises an initial spatial rotation entity configured to perform a spatial rotation of the first and second polarization signals (111, 112) using an initial phase shift parameter and an initial rotation angle parameter, to yield the signals derived from the first and second polarization signals; and
- the parameter determination unit (103) is configured to also determine the initial phase shift parameter and the initial rotation angle parameter using the cost function.

7. The polarization demultiplexing unit (200, 300, 400) of any previous claim, wherein
- the polarization demultiplexing unit (200, 300, 400) comprises a first processing path for determining the first polarization demultiplexed signal (121), and a second processing path for determining the second polarization demultiplexed signal (122);
- the first and second processing paths each comprise a dedicated delay unit and a dedicated spatial rotation entity using dedicated delay parameters, phase shift parameters and rotation angle parameters; and
- the parameter determination unit (103) is configured to determine the dedicated phase shift parameters and rotation angle parameters.

8. The polarization demultiplexing unit (200, 300, 400) of any previous claim, wherein the cost function depends on an average absolute value of an amplitude of the first and the second polarization demultiplexed signals (121, 122).

9. The polarization demultiplexing unit (200, 300, 400) of any previous claim, wherein the parameter determination unit (103) is configured to determine the phase shift parameter and the rotation angle parameter iteratively on a sample-by-sample basis, such that the cost function is increased or decreased.

10. An optical receiver configured to recover data, the optical receiver comprising
- a polarization demultiplexing unit (200, 300, 400) according to any of the previous claims; and
- a decision unit configured to determine the data from the first and second polarization demultiplexed signals (121, 122).

11. The optical receiver of claim 10, further comprising first and second shaping filters for filtering signals derived from the first and second polarization signals (111, 112), respectively; wherein the first and second shaping filters are dependent on an optical transmitter of the received optical signal (211).

12. A method for determining a first and a second polarization demultiplexed signal (121, 122) from a first and a second polarization signal (111, 112), wherein the first and second polarization signals (111, 112) are generated from an optical signal received by a coherent optical frontend (231, 232), wherein the first and second polarization signals (111, 112) each comprise temporal sequences of samples, the method **characterized by**:
- delaying a signal derived from the first polarization signal (111) relative to a signal derived from the second polarization signal (112) by a delay parameter, to yield a first delayed signal, wherein the delay parameter is variable;
- performing a spatial rotation of the first delayed signal and of the signal derived from the second polarization signal (112) using a phase shift parameter and a rotation angle parameter; and
- determining the phase shift parameter, the delay parameter and the rotation angle parameter using a cost function depending on a property of the first and second polarization demultiplexed signals (121, 122), wherein the phase shift parameter and the rotation angle parameter are determined iteratively on a sample-by-sample basis such that the cost function is increased or decreased.

## Patentansprüche

1. Polarisationsdemultiplexeinheit (200, 300, 400), die konfiguriert ist, ein erstes und ein zweites polarisationsdemultiplexiertes Signal (121, 122) aus einem ersten und einem zweiten Polarisationssignal (111, 112) zu bestimmen,
wobei die Polarisationsdemultiplexeinheit (200, 300, 400) Folgendes aufweist:
- ein kohärentes optisches Frontend (231, 232), das konfiguriert ist, ein optisches Signal zu empfangen und das erste und daszweite Polarisationssignal (111, 112) zu erzeugen, wobei das erste und zweite Polarisationssignal (111, 112) jeweils zeitliche Sequenzen von Proben umfassen;
wobei die Polarisationsdemultiplexeinheit (200, 300, 400) **gekennzeichnet ist durch**:
- eine Verzögerungseinheit (203, 303, 403), die konfiguriert ist, ein Signal zu verzögern, das von dem ersten Polarisationssignal (111) in Bezug auf ein Signal abgeleitet ist, das von dem zweiten Polarisationssignal (112) mit einem Verzögerungsparameter abgeleitet ist, um ein erstes verzögertes Signal zu erhalten;
- eine räumliche Rotationseinheit (102, 202), die konfiguriert ist, eine räumliche Drehung des ersten verzögerten Signals und des aus dem zweiten Polarisationssignal (112) abgeleiteten Signals unter Verwendung eines Phasenverschiebungsparameters und eines Drehwinkelparameters durchzuführen; und
- eine Parameterbestimmungseinheit (103), die konfiguriert ist, den Phasenverschiebungsparameter und den Drehwinkelparameter unter Verwendung einer Kostenfunktion in Abhängigkeit von einer Eigenschaft des ersten und des zweiten Polarisationsdemultiplexsignals (121, 122) zu bestimmen, wobei der Phasenverschiebungsparameter und der Drehwinkelparameter iterativ auf einer Stichprobenbasis bestimmt werden, so dass die Kostenfunktion erhöht oder verringert wird, und wobei
- der Verzögerungsparameter variabel ist; und
- wobei die Parameterbestimmungseinheit (103) konfiguriert ist, auch den Verzögerungsparameter unter Verwendung der Kostenfunktion zu bestimmen.

2. Polarisationsdemultiplex-Einheit (200, 300, 400)
nach einem vorhergehenden Anspruch, wobei
- die räumliche Rotationseinheit (102, 202) eine Phasenverschiebungseinheit (101) und eine Rotationseinheit (202) aufweist;
- die Phasenverschiebungseinheit (101) konfiguriert ist, eine Phasenverschiebung in Abhängigkeit von dem Phasenverschiebungsparameter auf das aus dem zweiten Polarisationssignal (112) abgeleitete Signal anzuwenden, um ein zweites phasenverschobenes Signal zu erhalten;
- die Rotationseinheit (202) konfiguriert ist, das erste verzögerte Signal und das zweite phasenverschobene Signal in Abhängigkeit von dem Drehwinkelparameter zu drehen, um das erste und zweite polarisationsdemultiplexierte Signal (121, 122) zu erhalten.

3. Polarisationsdemultiplex-Einheit (200, 300, 400) nach einem der vorhergehenden Ansprüche, wobei
- jede Stichprobe eine vorgegebene zeitliche Stichprobenperiode abdeckt; und
- der Verzögerungsparameter einem ganzzahligen Vielfachen der zeitlichen Abtastperiode entspricht.

4. Polarisationsdemultiplex-Einheit (200, 300, 400) nach einem der vorhergehenden Ansprüche , wobei
- die Verzögerungseinheit (203, 303, 403) einen Interpolationsfilter mit einer Vielzahl von Filterkoeffizienten aufweist; und
- die Vielzahl von Filterkoeffizienten von dem Verzögerungsparameter abhängig ist, so dass der Interpolationsfilter konfiguriert ist, um das von dem ersten Polarisationssignal (111) abgeleitete Signal mit dem Verzögerungsparameter zu verzögern.

5. Polarisationsdemultiplexeinheit (200, 300, 400) nach Anspruch 4, wobei
- die Verzögerungseinheit (203, 303, 403) eine Nachschlagtabelle aufweist, die eine Zuordnung zwischen verschiedenen Verzögerungsparametern und verschiedenen Pluralitäten von Filterkoeffizienten bereitstellt; und
- die Verzögerungseinheit (203, 303, 403) konfiguriert ist, den Interpolationsfilter für einen bestimmten Verzögerungsparameter unter Verwendung der Nachschlagetabelle zu bestimmen.

6. Polarisationsdemultiplex-Einheit (200, 300, 400) nach einem der vorhergehenden Ansprüche, wobei
- die Polarisationsdemultiplexeinheit (200, 300, 400) ferner eine initiale räumliche Rotationseinheit aufweist, die konfiguriert ist, eine räumliche Drehung des ersten und des zweiten Polarisationssignals (111, 112) unter Verwendung eines initialen Phasenverschiebungsparameters und eines initialen Drehwinkelparameters durchzuführen, um die von dem ersten und dem zweiten Polarisationssignal abgeleiteten Signale zu erhalten; und
- die Parameterbestimmungseinheit (103) konfiguriert ist, auch den anfänglichen Phasenverschiebungsparameter und den anfänglichen Drehwinkelparameter unter Verwendung der Kostenfunktion zu bestimmen.

7. Polarisationsdemultiplex-Einheit (200, 300, 400)
nach einem der vorhergehenden Ansprüche, wobei
- die Polarisationsdemultiplexeinheit (200, 300, 400) einen ersten Verarbeitungspfad zum Bestimmen des ersten Polarisationsdemultiplexsignals (121) und einen zweiten Verarbeitungspfad zum Bestimmen des zweiten Polarisationsdemultiplexsignals (122) aufweist;
- der erste und zweite Verarbeitungspfad jeweils eine dedizierte Verzögerungseinheit und eine dedizierte räumliche Rotationseinheit unter Verwendung dedizierter Verzögerungsparameter, Phasenverschiebungsparameter und
Drehwinkelparameter aufweisen; und
- die Parameterbestimmungseinheit (103) konfiguriert ist, die dedizierten Phasenverschiebungsparameter und Drehwinkelparameter zu bestimmen.

8. Polarisationsdemultiplexeinheit (200, 300, 400)
nach einem der vorhergehenden Ansprüche,
wobei die Kostenfunktion von einem durchschnittlichen Absolutwert einer Amplitude des ersten und des zweiten polarisationsdemultiplexierten Signals (121, 122) abhängt.

9. Polarisationsdemultiplex-Einheit (200, 300, 400)
nach einem der vorhergehenden Ansprüche,
wobei die Parameterbestimmungseinheit (103) konfiguriert ist, den Phasenverschiebungsparameter und den Drehwinkelparameter iterativ auf einer Stichprobenbasis zu bestimmen, so dass die Kostenfunktion erhöht oder verringert wird.

10. Optischer Empfänger, der konfiguriert ist, Daten wiederherzustellen,
wobei der optische Empfänger Folgendes aufweist:
- eine Polarisationsdemultiplexeinheit (200, 300, 400) nach einem der vorhergehenden Ansprüche; und
- eine Entscheidungseinheit, die konfiguriert ist, um die Daten aus den ersten und den zweiten polarisationsdemultiplexierten Signalen (121, 122) zu bestimmen.

11. Optische Empfänger nach Anspruch 10,
der ferner erste und zweite Formgebungsfilter aufweist zum Filtern von Signalen, die von den ersten bzw. zweiten Polarisationssignalen (111, 112) abgeleitet sind; wobei die ersten und zweiten Formgebungsfilter von einem optischen Sender des empfangenen optischen Signals (211) abhängig sind.

12. Verfahren zum Bestimmen eines ersten und eines zweiten polarisationsdemultiplexierten Signals (121, 122) aus einem ersten und einem zweiten Polarisationssignal (111, 112), wobei das erste und das zweite Polarisationssignal (111, 112) aus einem optischen Signal erzeugt werden, das von einem kohärenten optischen Frontend (231, 232) empfangen wird, wobei das erste und das zweite Polarisationssignal (111, 112) jeweils zeitliche Abfolgen von Abtastwerten umfassen, wobei das Verfahren **gekennzeichnet ist durch**:
- Verzögern eines Signals, das von dem ersten Polarisationssignal (111) in Bezug auf ein Signal, das von dem zweiten Polarisationssignal (112) abgeleitet ist, mit einem Verzögerungsparameter, um ein erstes verzögertes Signal zu erhalten, wobei der Verzögerungsparameter variabel ist;
- Durchführen einer räumlichen Drehung des ersten verzögerten Signals und des aus dem zweiten Polarisationssignal (112) abgeleiteten Signals unter Verwendung eines Phasenverschiebungsparameters und eines Drehwinkelparameters; und
- Bestimmen des Phasenverschiebungsparameters, des Verzögerungsparameters und des Drehwinkelparameters unter Verwendung einer Kostenfunktion in Abhängigkeit von einer Eigenschaft des ersten und des zweiten Polarisationsdemultiplexsignals (121, 122), wobei der Phasenverschiebungsparameter und der Drehwinkelparameter iterativ auf einer Stichprobenbasis bestimmt werden, so dass die Kostenfunktion erhöht oder verringert wird.

## Revendications

1. Unité de démultiplexage de polarisation (200, 300, 400) configurée pour calculer un premier signal et un deuxième signal démultiplexés de polarisation (121, 122) à partir d'un premier et d'un deuxième signal de polarisation (111, 112), l'unité de démultiplexage de polarisation (200, 300, 400) comprenant :
- une interface d'entrée cohérente optique (231, 232) configurée pour recevoir un signal optique et pour générer les premier et deuxième signaux de polarisation (111, 112), selon laquelle les premier et deuxième signaux de polarisation (111, 112) comprennent chacun des séquences temporelles d'échantillons ;
- l'unité de démultiplexage de polarisation (200, 300, 400) étant **caractérisée** en ce par :
- une unité de retardement (203, 303, 403) configurée pour retarder un signal dérivé du premier signal de polarisation (111) par rapport au signal dérivé du deuxième signal de polarisation (112) par un paramètre de retardement, afin de fournir un premier signal retardé ;
- une entité de rotation spatiale (102, 202) configurée pour effectuer une rotation spatiale du premier signal retardé et du signal dérivé du deuxième signal de polarisation (112) par le biais d'un paramètre de décalage de phase et d'un paramètre d'angle de rotation ; et
- une unité de calcul de paramètre (103) configurée pour calculer le paramètre de décalage de phase et le paramètre d'angle de rotation par le biais d'une fonction de coût qui dépend d'une propriété des premier et deuxième signaux de polarisation démultiplexés (121, 122), selon laquelle le paramètre de décalage de phase et le paramètre d'angle de rotation sont calculés de manière itérative sur la base d'une analyse d'échantillon par échantillon, de sorte que la fonction de coût augmente ou diminue, et selon laquelle:
- le paramètre de retardement est variable ; et
- l'unité de calcul de paramètre (103) est configurée pour aussi calculer le paramètre de retardement par le biais de la fonction de coût.

2. L'unité de démultiplexage de polarisation(200, 300, 400) selon l'une quelconque des revendications précédentes, selon laquelle :
- l'entité de rotation spatiale (102, 202) comprend une unité de décalage de phase (101) et une unité de rotation (202) ;
- l'unité de décalage de phase (101) est configurée pour appliquer un décalage de phase au signal dérivé du deuxième signal de polarisation (112), conformément au paramètre de décalage de phase, afin de fournir un deuxième signal en décalage de phase ;
- l'unité de rotation (202) est configurée pour appliquer une rotation au premier signal retardé et au deuxième signal en décalage de phase conformément au paramètre d'angle de rotation, afin de fournir les premier et deuxièmes signaux de polarisation démultiplexés (121, 122).

3. L'unité de démultiplexage de polarisation(200, 300, 400) selon l'une quelconque des revendications précédentes, selon laquelle :
- chaque échantillon couvre un intervalle temporel prédéterminé d'échantillonnage ; et
- le paramètre de retardement correspond à un multiple d'entier de l'intervalle temporel d'échantillonnage.

4. L'unité de démultiplexage de polarisation(200, 300, 400) selon l'une quelconque des revendications précédentes, selon laquelle :
- l'unité de retardement (203, 303, 403) comprend une filtre d'interpolation comprenant une pluralité de coefficients de filtre ; et
- la pluralité de coefficients de filtre est dépendante du paramètre de retardement, de sorte que le filtre d'interpolation est configuré pour retarder le signal dérivé du premier signal de polarisation (111) du paramètre de retardement.

5. L'unité de démultiplexage de polarisation (200, 300, 400) selon la revendication 4, selon laquelle:
- l'unité de retardement (203, 303, 403) comprend une table de recherche fournissant une correspondance entre divers paramètres de retardement et diverses pluralités de coefficients de filtre ; et
- l'unité de retardement (203, 303, 403) est configuré pour calculer le filtre d'interpolation par rapport à un paramètre donné de retardement, par le biais de la table de recherche.

6. L'unité de démultiplexage de polarisation(200, 300, 400) selon l'une quelconque des revendications précédentes, selon laquelle :
- l'unité de démultiplexage de polarisation (200, 300, 400) comprend en outre une entité de rotation spatiale initiale configurée pour appliquer une rotation spatiale des premier et deuxième signaux de polarisation (111,112) par le biais d'un paramètre de décalage initial et d'un paramètre d'angle de rotation initial, afin de fournir les signaux dérivés des premier et deuxièmes signaux de polarisation ; et
- l'unité de calcul de paramètre (103) est configurée pour aussi calculer le paramètre de décalage de phase initial et le paramètre d'angle de rotation initial par le biais de la fonction de coût.

7. L'unité de démultiplexage de polarisation(200, 300, 400) selon l'une quelconque des revendications précédentes, selon laquelle :
- l'unité de démultiplexage de polarisation (200, 300, 400) comprend un premier chemin de traitement pour calculer le premier signal de polarisation démultiplexé (121), et un deuxième chemin de traitement pour calculer le deuxième signal de polarisation démultiplexé (122) ;
- les premier et deuxième chemins de traitement comprenant chacun une unité de retardement dédiée et une entité de rotation spatiale dédiée mettant en œuvre des paramètres de retardement dédiés, des paramètres de décalage de phase dédiés, et des paramètres d'angle de rotation dédiés ; et
- l'unité de calcul de paramètre (103) est configurée pour calculer les paramètres dédiés de décalage de phase et les paramètres dédiés d'angle de rotation.

8. L'unité de démultiplexage de polarisation (200, 300, 400) selon l'une quelconque des revendications précédentes, selon laquelle la fonction de coût dépend d'une valeur moyenne absolue d'une amplitude des premier et deuxièmes signaux de polarisation démultiplexés (121, 122).

9. L'unité de démultiplexage de polarisation (200, 300, 400) selon l'une quelconque des revendications précédentes, selon laquelle l'unité de calcul de paramètre (103) est configurée pour calculer le paramètre de décalage de phase et le paramètre d'angle de rotation de manière itérative sur la base d'une analyse d'échantillon par échantillon, de sorte que la fonction de coût augmente ou diminue.

10. Récepteur optique configuré pour recevoir des données, le récepteur optique comprenant :
- une unité de démultiplexage de polarisation (200, 300, 400) selon l'une quelconque des revendications précédentes ; et
- une unité décisionnelle configurée pour calculer les données à partir des premier et deuxième signaux de polarisation démultiplexés (121,122).

11. Récepteur optique selon la revendication 10, comprenant en outre des premier et deuxièmes filtres de formage pour filtrer des signaux dérivés respectivement des premier et deuxième signaux de polarisation (111, 112), selon lequel les premier et deuxième filtres de formage sont dépendants d'un émetteur optique du signal optique reçu (211).

12. Procédé de calcul d'un premier signal de polarisation démultiplexé et d'un deuxième signal de polarisation démultiplexé (121, 122) à partir d'un premier signal de polarisation et d'un deuxième signal de polarisation (111, 112), selon lequel les premier et deuxième signaux de polarisation (111, 112) sont générés à partir d'un signal optique reçu au niveau d'une interface d'entrée cohérente optique (231, 232), selon lequel les premier et deuxième signaux de polarisation (111, 112) comprennent chacun des séquences temporelles d'échantillons, le procédé étant **caractérisé par** :
- le retardement d'un signal dérivé du premier signal de polarisation (111) par rapport au signal dérivé du deuxième signal de polarisation (112) par un paramètre de retardement, afin de fournir un premier signal retardé, selon lequel le paramètre de retardement est variable ;
- l'application d'une rotation spatiale au premier signal retardé et au signal dérivé du deuxième signal de polarisation (112) par le biais d'un paramètre de décalage de phase et d'un paramètre d'angle de rotation ; et
- le calcul du paramètre de décalage, le paramètre de décalage et le paramètre d'angle de rotation mettant en œuvre une fonction de coût qui dépend d'une propriété des premier et deuxième signaux de polarisation démultiplexés (121, 122), selon laquelle le paramètre de décalage de phase et le paramètre d'angle de rotation sont calculés de manière itérative sur la base d'une analyse d'échantillon par échantillon, de sorte que la fonction de coût augmente ou diminue.
